# EUROPEAN PATENT SPECIFICATION

(11) **EP 1 985 403 B1**
(45) Date of publication and mention of the grant of the patent: **18.05.2011**
(21) Application number: 08007812.4
(22) Date of filing: 23.04.2008
(51) Int. Cl.: B23K 26/16, B23K 26/36, B08B 7/00

(54) **Laser ablation**
Laserablation
Ablation au laser

(30) Priority: 23.04.2007 ZA 200703305
(43) Date of publication of application: 29.10.2008
(73) Proprietor: CSIR, Pretoria, Gauteng Provence (ZA); The South African Nuclear Energy Corporation Limited, Pelindaba, District Madibeng North West Province (ZA)
(72) Inventor: Herselman, Christiaan Johan, Ifafi District Madibeng North West Province (ZA); Van Heerden, Philippus Rudolph, Hartbeespoort Dristrict Madibeng North West Province (ZA)
(74) Representative: Long, Edward Anthony

(56) References cited:
- JP-A- 62 054 590
- US-A- 5 780 806
- US-A1- 2002 134 770

## Description

THIS INVENTION relates to laser ablation, particularly to the removal of a surface coating from a substrate by means of laser ablation or cleaning. It relates more specifically to a method of carrying out laser ablation, to a laser ablation working head, and to a laser ablation apparatus (see the documents US-A-4 780 806 and US-A-2002 0184770.

In accordance with a first aspect of this invention, there is provided a method according to claim 7.

The incidence angle at which the laser beam is focussed onto the substrate may be between 20° and 40° to the normal to the surface of the substrate, typically at about 30° to the normal to the surface of the substrate.

This invention is expected to find particular application in the field of removing hazardous substances by laser ablation, ie by laser cleaning, especially radio-active substances and volatile organic compounds, which form when certain paints are ablated. Then, the method may include collecting debris downstream of the extraction opening and dealing with said debris in a manner appropriate for the respective material(s).

The beam port may be covered by a window of a material which is transparent to the laser beam.

In accordance with a second aspect of the invention, there is provided a hollow laser ablation working head according to claim 5.

As hereinbefore described, the beam, in use, may have an incidence angle relative to the normal to the substrate of between 20° and 40°, typically about 30°.

The beam port may be covered by a window of a material which is transparent to the laser beam.

If desired, a ventilation inlet may be provided proximate one end, or a proximate portion, of the exposure opening to promote flow of air through the exposure opening along the flow passage towards the extraction opening. The exposure opening and ventilation inlet may be integral.

The flow passage may be unobstructed and of aerodynamic design to promote air flow towards the extraction opening. Generally, walls or structure adjoining the flow path, will extend alongside the flow path, i.e. generally tangentially to the flow path.

The invention extends to a laser ablation apparatus, which includes a hollow laser ablation working head according to the second aspect of the invention, the working head being operatively attached to a suction device adapted for providing negative pressure internally of the working head and flow of air along said flow passage, and a laser device operatively connected to the working head for directing a laser beam through the beam port and the exposure opening onto a surface to be cleaned.

In one embodiment of the invention, the laser device may be a laser apparatus, i.e. apparatus capable of generating a laser beam. However, in another embodiment of the invention, the laser device may be a laser beam transport device, such as an optical fibre, connected to or leading from a laser apparatus.

The invention is now described by way of example with reference to the accompanying diagrammatic drawing which shows, partially in section, a hollow laser ablation working head in accordance with the invention.

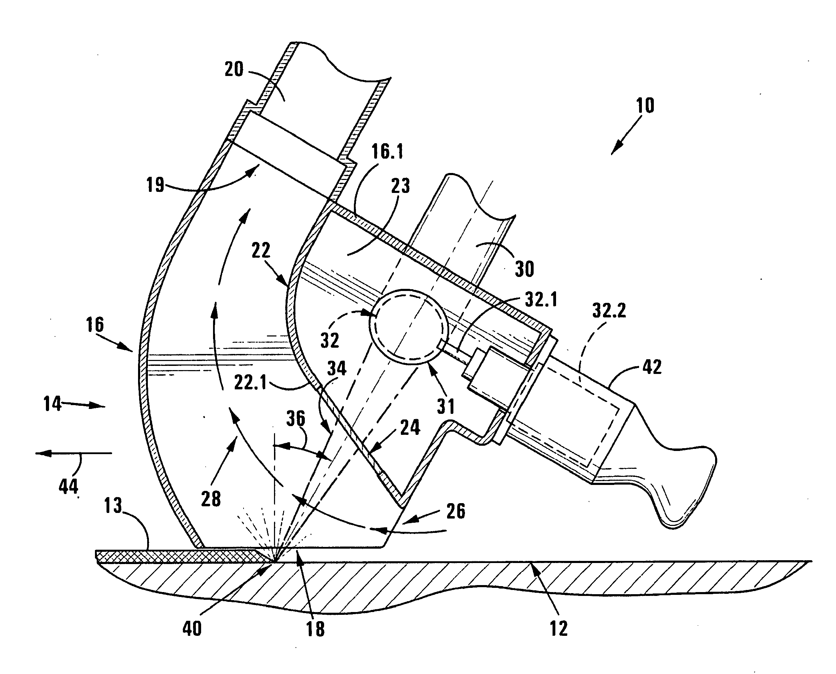

In the drawing, a hollow laser ablation working head in accordance with the invention is generally indicated by reference numeral 10. The working head 10 is shown in use removing a coating 13 from a substrate 12. The coating 13 is in the form of a layer of paint which is radio-actively contaminated, and which is to be removed. In other applications, the substance to be ablated may be hazardous for another reason, e.g. it may form volatile organic compounds when ablated.

The working head 10 comprises a generally hollow body 14 formed by a wall 16. At a bottom of the body 14, there is provided an exposure opening 18 defining a planar bottom. The planar bottom will be moved over the substrate 12 to be cleaned in close proximity thereto.

Generally opposite the exposure opening 18, there is provided an extraction opening 19. Attachment means in the form of a connector 20 for connection to a suction apparatus (not shown), protrudes from the wall 16, around the extraction opening 19.

Internally of the wall 16, within the hollow body 14, there is provided an internal wall 22 having a first section 22.1 extending from the wall 16 adjacent a ventilation opening 26 integral with the exposure opening 18 obliquely inwardly to a position roughly in the centre of the hollow body 14, and thence curves smoothly toward one extremity of the extraction opening to a planar wall portion 16.1 generally opposite to the exposure opening 18. The wall portion 16.1 is adjacent the extraction opening connector 20 and defines a closed top of the body 14. The internal wall 22 demarcates roughly an internal corner area 23 of the hollow body 14. A beam port covered by a window 24 is provided within the first section 22.1. It is envisaged that the port may be open in some applications.

Adjacent an outer extremity of the first section 22.1, and adjacent an extremity of the exposure opening 18, there is provided the ventilation opening 26.

A flow passage 28 is established generally from the ventilation opening 26, in conjunction with the exposure opening 18, internally toward the extraction opening connector 20. The flow passage 28 extends alongside, i.e. generally tangentially to, the internal wall 22. The flow passage 28 is defined at the opposed side by a curved portion of the wall 16 guiding the flow passage 28 toward the extraction opening connector 20. It is to be appreciated that the flow passage 28 is of generally aerodynamic form having no obstruction and no sharp corner or bend to inhibit flow.

Adjacent the extraction opening connector 20, but on the opposed side of the internal wall section 22, i.e. within the area 23, there is provided a laser connection means in the form of a connector housing 30 secured to the hollow body 14. The connector housing 30, in one plane which can be seen in the drawing, is generally in line with the beam port or beam window 24 and the exposure opening 18 such that it will in use be aligned, in respect of said one plane, with a target area 40 which is to be ablated. The connector housing 30 accommodates an optical fibre leading from a laser machine. In other embodiment, another kind of beam transport device may be used.

In the drawing, the housing 30 is shown without its lateral location at right angles to said one plane (i.e. its depth in relation to the drawing) being defined. In reality, it is displaced in said right angled plane from the level of the beam port 24. Aligned with the housing 30 and the optical fibre is a first, oblique reflector 31 which reflects the beam onto a second, complementary oblique reflector 32 which is aligned with and directs the beam via the beam port 24 and exposure opening 18 onto the target area.

The second reflector 32 is connected via a pivoting shaft 32.1 to a drive motor 32.2 accommodated within a motor housing 42 which is secured to the (main) body 14. The motor 32.2 and an associated transmission and the shaft 32.1 operate as a scanning drive cyclically to tilt the reflector 32 to scan the beam 34 in lateral direction so as to treat a bandwidth, for example selected to be, typically, 30 mm. The scanning rate may be selected at about 10 Hz.

In another type of device, e.g. using a CO₂ TEA laser having a large spot size and a low pulse rate, a fast moving scanning drive may be obviated.

It is significant that the beam window 24 is oblique relative to the beam path leading toward the exposure opening 18.

In use, suction is applied via the extraction opening connector 20 to create a reduced or negative pressure within the hollow body 14 and to move air via the ventilation opening 26 and exposure opening 18 via the flow passage 28 toward the extraction opening connector 20 and the suction or extraction apparatus. Thus, the suction creates a reduced or negative pressure in the flow passage 28 from the exposure opening 18 to the extraction opening 19 and causes an air flow along the flow passage 28. In this embodiment, for the application mentioned, appropriate measures will be taken to accumulate debris of the radio-active paint layer 13 at high integrity to enable the debris to be dealt with and stowed appropriately.

The laser beam, schematically indicated by reference numeral 34, is directed at and focussed via the exposure opening 18 onto the substrate 12, more specifically the contaminated paint layer 13 to remove the paint layer 13 by ablation as indicated by reference numeral 40. It is significant that the beam 34 has an incidence angle generally indicated by reference numeral 36 onto the substrate 12 (bearing in mind that the exposure opening 18 will generally be parallel to the substrate 12). The angle 36, in this embodiment, is preferably about 30° to the normal to the exposure opening. The significance of this will be explained below.

Where the focussed laser beam impinges on the paint layer 13, as indicated by reference numeral 40, the extremely high energy transferred to the paint layer 13 by means of the laser beam 34, causes the paint particles to disintegrate into vapour and other gaseous constituents and small particles of solid and molten material to form. The heat generated at the area 40 explosively accelerates the gas and particles up to supersonic speed away from the substrate 12. The gas and particles are accelerated in a cone centred along the normal to a surface of the substrate 12 at the position 40 at an enclosed cone angle of up to about 110°. In the cone angle, the concentration distribution of particles is typically bell-shaped having a peak concentration substantially normal to the substrate i.e. along the axis of the cone, and tapering off to the outside. This cone of particles with its associated plume of vapour and gas potentially obscures passage of the incoming laser beam, thus potentially reducing effective ablation and rendering the laser optics and the protective windows prone to damage. In accordance with the invention, as explained above, the laser beam 34 is directed at an incidence angle 36, which is advantageously about 30°, to the normal to the substrate 12, thus causing passage of the laser beam through a much less dense area of the plume. This is of particular importance and is regarded by the Applicant as greatly enhancing efficiency of transmission of the energy onto the substrate, compared to other devices known to the Applicant.

The working head 10 is moved in the direction of arrow 44 as ablation takes place. This movement, together with the bandwidth movement achieved by lateral scanning of the laser beam as hereinbefore described, results in the working head being traversed over the substrate in an area thereof in which laser ablation is required.

It is significant that the extraction opening connector 20 is virtually on axis relative to the exposure opening 18 and the position 40 from which the cone of debris emanates. Thus, to a large extent, the debris is carried away in the direction in which it moves naturally from the target area 40. This greatly enhances the integrity of removal of the debris.

Two aspects relating to the beam window 24 are of particular importance. First, it is to be appreciated that the beam window 24 is angled relative to the normal to the laser beam direction. This increases the cross-sectional area of the beam intersection with the beam window, which in turn causes reduced fluence at the window and reduces the heat load on the window. The window is thus generally at a lower temperature which renders it less prone to particles which do reach the window to melt and to attach to the window.

Secondly, the beam window is oriented to be alongside, i.e. substantially or generally tangential to, the flow passage. This has the effect of rendering the flow passage more aerodynamic, and also enhances the cooling effect of the air flowing past the beam window on the window. This increases cooling and cleaning of the beam window.

It is also significant that the beam window is positioned remotely from the target area to increase the working distance and to increase the space in which the extraction air can interact with the debris and change the direction away from the window.

The invention thus provides a number of advantages as embodied in the exemplified embodiment, some of which are:
a focussed, high energy laser beam is used for single pass total ablation;
the laser beam has an incident angle as mentioned above to avoid beaming through a concentrated or dense portion of the plume of debris;
the whole of the working head is under negative pressure thus enhancing the integrity at which debris is removed and appropriately dealt with;
the suction induced airflow is guided by a shaped extraction manifold, the curved portion of the wall 16 is generally in the direction of acceleration of the debris, the air passage has high flow efficiency, all of which enhance the efficiency of removal of the debris; and
the orientation of the beam window decreases laser fluence, improves the suction flow pattern and promotes cleaning and cooling of the beam window by sweeping airflow.

## Claims

1. A method of carrying out laser ablation by means of a hollow working head which is generally enclosed, having an exposure opening and an extraction opening spaced from the exposure opening and defining an internal flow passage between the exposure opening and the extraction opening, and including an internal beam port positioned internally of a wall of the working head and oriented alongside the flow passage, the method including
applying suction at the extraction opening to cause reduced pressure internally of the hollow working head and to cause an airflow along the flow passage generally tangentially past the beam port at a reduced pressure from the exposure opening to the extraction opening;
focussing a laser beam through the beam port and the exposure opening onto a substrate proximately below the exposure opening and
traversing the working head over the substrate in an area in which laser ablation is to be carried out; the method being **characterized in that** the laser beam is focused at an incidence angle of between 10° and 50° to the normal to a surface of the substrate; and by the step of
generating by laser ablation of material from the substrate, a cone or plume of debris generally in the direction of the normal to the substrate surface and in the direction of the extraction opening, with the airflow carrying away the debris in the direction of the extraction opening to avoid beaming of the laser beam through a concentrated or dense portion of the plume of debris;

2. A method according to Claim 1, wherein the incidence angle at which the laser beam is focussed onto the substrate is between 20° and 40° to the normal to the surface of the substrate.

3. A method according to Claim 2, wherein the incidence angle at which the laser beam is focussed onto the substrate is about 30° to the normal to the surface of the substrate.

4. A method according to any one of Claims 1 to 3 inclusive, which includes collecting debris formed by the ablation of the substrate surface, downstream of the extraction opening.

5. A hollow laser ablation working head which is generally enclosed, having an exposure opening and an extraction opening spaced from the exposure opening and defining an internal flow passage between the exposure opening and the extraction opening, and including an internal beam port positioned internally of a wall of the working head and alongside the flow passage, the working head comprising
attachment means associated with the extraction opening for attachment to a suction apparatus adapted to create reduced pressure internally of the hollow head; and
laser connection means upstream of the beam port for connection to a laser device to cause a laser beam in use to beam through the beam port toward the exposure opening at a predetermined angle such that, **characterized in that** in use, the beam will have an incidence angle relative to the normal to a substrate to be treated of between about 10° and about 50°, the exposure opening, the extraction opening and the internal beam port being arranged, in the working head, so that, in use, a cone or plume of debris is generated by laser ablation of material from the substrate, generally in the direction of the normal to the substrate surface and in the direction of the extraction opening, with the airflow carrying away the debris in the direction of the extraction opening to avoid beaming of the laser beam through a concentrated or dense portion of the plume of debris.

6. A working head according to Claim 5, wherein the beam port is covered by a window of a material which is transparent to the laser beam.

7. A working head according to Claim 5 or Claim 6, wherein a ventilation inlet is provided proximate one end of the exposure opening to promote flow of air through the exposure opening along the flow passage towards the extraction opening.

8. A working head according to Claim 7, wherein the exposure opening and ventilation inlet are integral.

9. A working head according to any one of Claims 5 to 8 inclusive, wherein the flow passage is unobstructed and of aerodynamic design to promote air flow towards the extraction opening.

10. Laser ablation apparatus, which includes a hollow laser ablation working head according to any one of Claims 5 to 9 inclusive, the working head being operatively attached to a suction device adapted for providing negative pressure internally of the working head and flow of air along said flow passage, and a laser device operatively connected to the working head for directing a laser beam through the beam port and the exposure opening onto a surface to be cleaned.

## Patentansprüche

1. Verfahren zur Durchführung der Laserablation mit einem hohlen Bearbeitungskopf, der im Allgemeinen gekapselt ist und eine Belichtungsöffnung und eine Absaugöffnung mit Abstand von der Belichtungsöffnung hat und zwischen der Belichtungsöffnung und der Absaugöffnung einen inneren Strömungsdurchgang begrenzt und einen inneren Strahlausgang umfasst, der im Inneren einer Wand des Bearbeitungskopfes angeordnet und entlang des Strömungsdurchgangs ausgerichtet ist, wobei das Verfahren umfasst,
an der Absaugöffnung eine Saugwirkung auszuüben, um in dem hohlen Bearbeitungskopf einen Unterdruck zu erzeugen und mit einem Unterdruck von der Belichtungsöffnung zu der Absaugöffnung einen Luftstrom durch den Strömungsdurchgang im Allgemeinen tangential hinter dem Strahlausgang zu erzeugen;
einen Laserstrahl durch den Strahlausgang und die Belichtungsöffnung mit einem Einfallswinkel von zwischen 10 ° und 50 ° zu der Senkrechten zu einer Oberfläche des Substrates dicht unter der Belichtungsöffnung auf ein Substrat zu bündeln; und
durch Laserablation von Material von der Oberfläche im Allgemeinen in senkrechter Richtung zur Substratoberfläche und in Richtung der Absaugöffnung ein Kegel oder eine Fahne abgetragenem Materials zu erzeugen, wobei der Luftstrom das abgetragene Material in Richtung der Absaugöffnung wegbefördert, um ein Strahlen des Laserstrahls durch einen konzentrierten oder dichten Abschnitt der Fahne abgetragenen Materials zu vermeiden; und
den Bearbeitungskopf über das Substrat in einem Bereich zu führen, in dem die Laserablation durchzuführen ist, **dadurch gekennzeichnet, dass** der Laserstrahl gebündelt ist.

2. Verfahren nach Anspruch 1, **dadurch gekennzeichnet, dass** der Einfallswinkel, in dem der Laserstrahl auf das Substrat gebündelt wird, zwischen 20 ° und 40 ° zu der Senkrechten zur Oberfläche des Substrates beträgt.

3. Verfahren nach Anspruch 2, **dadurch gekennzeichnet, dass** der Einfallswinkel, in dem der Laserstrahl auf das Substrat gebündelt wird, etwa 30 ° zu der Senkrechten zur Oberfläche des Substrates beträgt.

4. Verfahren nach einem der Ansprüche 1 bis 3, **dadurch gekennzeichnet, dass** es das Sammeln des durch Ablation der Substratoberfläche gebildeten abgetragenen Materials hinter der Absaugöffnung umfasst.

5. Ein hohler Bearbeitungskopf zur Laserablation, der im Allgemeinen gekapselt ist und eine Belichtungsöffnung und eine Absaugöffnung mit Abstand von der Belichtungsöffnung hat und zwischen der Belichtungsöffnung und der Absaugöffnung einen inneren Strömungsdurchgang begrenzt und einen inneren Strahlausgang umfasst, der im Inneren einer Wand des Bearbeitungskopfes angeordnet und entlang des Strömungsdurchgangs ausgerichtet ist, wobei der Bearbeitungskopf
der Absaugöffnung zugeordnete Befestigungsmittel zur Befestigung an einer Absaugvorrichtung umfasst, die geeignet ist, in dem hohlen Kopf einen Unterdruck zu erzeugen; und
vor dem Strahlausgang Laseranschlussmittel zum Anschluss an ein Lasergerät umfasst, um im Gebrauch einen Laserstrahl zu erzeugen, der in einem vorbestimmten Winkel durch den Strahlausgang hin zu der Belichtungsöffnung strahlt, **dadurch gekennzeichnet, dass** der Strahl im Gebrauch einen Einfallswinkel zu der Senkrechten zu einem Substrat aufweist, der auf etwa 10 ° bis etwa 50 ° einzustellen ist, wobei die Belichtungsöffnung, die Absaugöffnung und der innere Strahlausgang in dem Bearbeitungskopf so angeordnet sind, dass im Gebrauch durch Laserablation von Material von der Oberfläche im Allgemeinen in senkrechter Richtung zur Substratoberfläche und in Richtung der Absaugöffnung ein Kegel oder eine Fahne abgetragenem Materials erzeugt wird, wobei der Luftstrom das abgetragene Material in Richtung der Absaugöffnung wegbefördert, um ein Strahlen des Laserstrahls durch einen konzentrierten oder dichten Abschnitt der Fahne abgetragenen Materials zu vermeiden.

6. Bearbeitungskopf nach Anspruch 5, **dadurch gekennzeichnet, dass** der Strahlausgang von einem Fenster aus einem Material abgedeckt ist, das für den Laserstrahl durchlässig ist.

7. Bearbeitungskopf nach einem der Ansprüche 5 und 6, **dadurch gekennzeichnet, dass** dicht an einem Ende der Belichtungsöffnung ein Lüftungseinlass vorgesehen ist, um den Luftstrom durch die Belichtungsöffnung durch den Strömungsdurchgang hin zu der Absaugöffnung zu fördern.

8. Bearbeitungskopf nach Anspruch 7, **dadurch gekennzeichnet, dass** die Belichtungsöffnung und der Lüftungseinlass eine Einheit bilden.

9. Bearbeitungskopf nach einem der Ansprüche 5 bis 8, **dadurch gekennzeichnet, dass** der Strömungsdurchgang nicht abgedeckt und aerodynamisch ausgebildet ist, um den Luftstrom hin zu der Absaugöffnung zu fördern.

10. Laserablationsgerät mit einem hohlen Bearbeitungskopf zur Laserablation nach einem der Ansprüche 5 bis 9, wobei der Bearbeitungskopf mit einer Absaugvorrichtung funktionell verbunden ist, die geeignet ist, in dem Bearbeitungskopf einen Unterdruck und einen Luftstrom durch den Strömungsdurchgang zu erzeugen, und ein Lasergerät mit dem Bearbeitungskopf funktionell verbunden ist, um einen Laserstrahl durch den Strahlausgang und die Belichtungsöffnung auf eine zu reinigende Oberfläche zu richten.

## Revendications

1. Procédé d'exécution d'une ablation au laser au moyen d'une tête de travail creuse qui est globalement fermée, ayant une ouverture d'exposition et une ouverture d'extraction espacée de l'ouverture d'exposition et définissant un passage de flux interne entre l'ouverture d'exposition et l'ouverture d'extraction, et comportant un port de faisceau interne placé à l'intérieur d'une paroi de la tête de travail et orienté le long du passage de flux, le procédé comportant le fait d'appliquer une aspiration au niveau de l'ouverture d'extraction pour provoquer une pression réduite à l'intérieur de la tête de travail creuse et pour provoquer un flux d'air le long du passage de flux globalement de manière tangentielle au-delà du port de faisceau à une pression réduite à partir de l'ouverture d'exposition vers l'ouverture d'extraction ; de focaliser un faisceau laser à travers le port du faisceau et l'ouverture d'exposition sur un substrat à proximité au-dessous de l'ouverture d'exposition ; et de traverser la tête de travail sur le substrat dans une zone où l'ablation au laser doit être exécutée ; le procédé étant **caractérisé en ce que** le faisceau laser est focalisé à un angle d'incidence compris entre 10° et 50° par rapport à la normale sur une surface du substrat ; et par l'étape qui consiste à générer par une ablation au laser d'un matériau à partir du substrat, un cône ou panache de débris globalement dans la direction de la normale sur la surface du substrat et dans la direction de l'ouverture d'extraction, avec le flux d'air emportant les débris dans la direction de l'ouverture d'extraction pour empêcher un rayonnement du faisceau laser à travers une partie dense ou concentrée du panache de débris.

2. Procédé selon la revendication 1, dans lequel l'angle d'incidence auquel le faisceau laser est focalisé

3. Procédé selon la revendication 2, dans lequel l'angle d'incidence auquel le faisceau laser est focalisé sur le substrat est d'environ 30° par rapport à la normale sur la surface du substrat.

4. Procédé selon l'une quelconque des revendications 1 à 3 incluse, qui comporte la collecte de débris formés par l'ablation de la surface du substrat, en aval de l'ouverture d'extraction.

5. Tête de travail pour ablation au laser creuse qui est globalement fermée, ayant une ouverture d'exposition et une ouverture d'extraction espacée de l'ouverture d'exposition et définissant un passage de flux interne entre l'ouverture d'exposition et l'ouverture d'extraction, et comportant un port de faisceau interne placé à l'intérieur d'une paroi de la tête de travail et le long du passage de flux, la tête de travail comprenant un moyen de fixation associé à l'ouverture d'extraction pour une fixation à un appareil d'aspiration adapté pour créer une pression réduite dans la tête creuse ; et un moyen de liaison par laser en amont du port de faisceau pour une liaison à un dispositif laser pour amener un faisceau laser en utilisation à rayonner à travers le port de faisceau vers l'ouverture d'exposition à un angle prédéterminé de sorte que, **caractérisé en ce qu'**en utilisation, le faisceau aura un angle d'incidence par rapport à la normale sur un substrat à traiter entre environ 10° et environ 50°, l'ouverture d'exposition, l'ouverture d'extraction et le port de faisceau interne étant agencés, dans la tête de travail, de sorte que, en utilisation, un cône ou panache de débris est généré par une ablation au laser d'un matériau provenant du substrat, globalement dans la direction de la normale à la surface du substrat et dans la direction de l'ouverture d'extraction, avec le flux d'air emportant les débris dans la direction de l'ouverture d'extraction pour empêcher un rayonnement du faisceau laser à travers une partie dense ou concentrée du panache de débris.

6. Tête de travail selon la revendication 5, dans laquelle le port de faisceau est couvert par une fenêtre d'un matériau qui est transparent au faisceau laser.

7. Tête de travail selon la revendication 5 ou la revendication 6, dans laquelle une entrée de ventilation est pourvue à proximité d'une extrémité de l'ouverture de l'exposition pour favoriser le flux d'air à travers l'ouverture d'exposition le long du passage de flux vers l'ouverture d'extraction.

8. Tête de travail selon la revendication 7, dans lequel l'ouverture d'exposition et l'entrée de ventilation font partie intégrante.

9. Tête de travail selon l'une quelconque des revendications 5 à 8 incluse, dans laquelle le passage de flux est libre et a une conception aérodynamique pour favoriser le flux d'air vers l'ouverture d'extraction.

10. Appareil d'ablation au laser, qui comporte une tête de travail d'ablation au laser creuse selon l'une quelconque des revendications 5 à 9 incluse, la tête de travail étant fixée de manière fonctionnelle à un dispositif d'aspiration adapté pour assurer une pression négative à l'intérieur de la tête de travail et un flux d'air le long dudit passage de flux, et un dispositif laser relié de manière fonctionnelle à la tête de travail pour diriger un faisceau laser à travers le port de faisceau et l'ouverture d'exposition sur une surface à nettoyer.
